# EUROPÄISCHE PATENTSCHRIFT

(11) **EP 2 029 258 B1**
(45) Veröffentlichungstag und Bekanntmachung des Hinweises auf die Patenterteilung: **23.11.2011**
(21) Anmeldenummer: 07730164.6
(22) Anmeldetag: 14.06.2007
(51) Int. Cl.: B01D 46/52, B01D 25/24, B01D 25/00, B01D 25/32

(54) **KOMPAKTFILTERELEMENT MIT AUSKLOPFSCHUTZ**
COMPACT FILTER ELEMENT WITH KNOCK PROTECTION
ÉLÉMENT DE FILTRE COMPACT AVEC PROTECTION DE DÉPOUSSIÉRAGE

(30) Priorität: 16.06.2006 DE 102006028161
(43) Veröffentlichungstag der Anmeldung: 04.03.2009
(73) Patentinhaber: Mann + Hummel GmbH, 71638 Ludwigsburg (DE)
(72) Erfinder: RIEGER, Mario, 71691 Freiberg (DE)
(86) Internationale Anmeldenummer: PCT/EP2007/055898
(87) Internationale Veröffentlichungsnummer: WO 2007/144405

(56) Entgegenhaltungen:
- EP-A- 1 736 227
- WO-A-97/40908
- WO-A-03/084641
- DE-A1- 19 619 770
- DE-A1- 19 734 081
- US-A1- 2002 185 008
- US-A1- 2005 166 561
- US-S1- D 484 584

## Beschreibung

### Technisches Gebiet

Die Erfindung betrifft ein Kompaktfilterelement mit Ausklopfschutz mit den Merkmalen des Oberbegriffs des Anspruchs 1.

### Stand der Technik

Das Dokument DE 196 19 770 A1 zeigt ein flaches Luftfilterelement, welches in einem Rahmen eingesetzt und damit dichtend fixiert ist. Der Rahmen ist auf der rohluftseitigen Fläche mit einer Gitterstruktur versehen, die das Filterelement abstützt.
In der Schrift DE 197 34 081 A1 ist ein zickzackförmig gefaltetes, plattenförmiges Luftfilterelement mit einer Gitterstruktur gezeigt. Die Gitterstruktur ermöglicht ein Abreinigen des Filterelementes durch Ausklopfen oder Ausblasen.
Aus der WO 03/084641 A ist eine Filterkonstruktion zum Filtern von Fluiden mit einem Filterelement mit Z-Filtermedium und einer Dichtungsanordnung mit einem Rahmen bekannt.
Aus den Dokumenten US D 484 584 S1, EPA 1 736 277, US2005166561 und WO 9740908 sind weitere Filterelemente in verschiedenen Ausführungsformen mit einem Rahmen bekannt.
Aus der DE 32 49 151 C2 ist ein Kompaktfilterelement bekannt. Dieses besteht aus einem gewellten und einem glatten Filterpapier. Die Filterpapiere sind miteinander verklebt und dann miteinander zu einem Filterelement der gewünschten Größe aufgewickelt. Dabei erfolgt die Verklebung durch streifenförmigen Auftrag im Kantenbereich derart, dass die Zwischenräume zwischen der gewellten und der glatten Lage abwechselnd an den beiden Stirnseiten verschlossen sind, sodass keine direkte Strömung durch die zwischen den Filterpapieren gebildeten Kanäle möglich ist. Eine Luftströmung gelangt von der Rohluft- zur Reinluftseite zunächst nur in einen Stichkanal hinein, dann durch das Filterpapier hindurch und aus einem Stichkanal auf der anderen Seite wieder heraus erfolgen. Gegenüber herkömmlichen Faltenfiltern haben diese Kompaktluftfilter den Vorteil, bei gleicher Baugröße eine größere Filterfläche zu bieten bzw. bei gleicher Filterfläche eine kleinere Baugröße zu ermöglichen.

Bei Faltenfiltern wird zum Teil eine Wartung eines Filtermediums derart praktiziert, dass das Filtereinsatzelement dem Gehäuse entnommen und durch Aufschlagen auf eine harte Oberfläche der zwischen den Falten befindliche Staub herausgelöst wird, wodurch die Standzeit des Filtereinsatzelements geringfügig erhöht werden kann, auch wenn nur grobe Partikel heraus gelöst werden und der die Poren des Filtermediums zusetzende Feinstaub verbleibt. Wird diese Praxis jedoch bei einem Kompaktfilterelement der eingangs genannten Art beibehalten, so kann es zu Ablösungen der Klebstoffraupen kommen, welche die gewellte Lage mit der glatten Decklage verbinden und zugleich die zwischen den Lagen gebildeten Kanäle endseitig verschließen. Wird hier eine Verklebung beschädigt, so ist eine direkte Luftströmung durch den Kanal von der Rohluft- zur Reinluftseite möglich. Ist das Kompaktfilterelement beispielsweise einem Verbrennungsmotor vorgeschaltet, kann es in Folge zu schweren Motorschäden kommen.

Neben einem Lösen der Klebstoffschicht kann auch das Filterpapier selbst beim Aufschlagen auf eine Oberfläche einreißen, wobei sich der Riss dann möglicherweise bis über die Klebstoffraupe hinweg erstreckt. Auch in diesem Fall wäre eine Durchströmung des Kompaktfilterelements mit Schmutz befrachteter Luft möglich.

Aufgabe der Erfindung ist es daher, ein Kompaktfilterelement der eingangs genannten Art so zu verbessern, dass es gegenüber einer unsachgemäßen Handhabung besser geschützt ist.

### Offenbarung der Erfindung

Gelöst wird die Aufgabe durch ein Kompaktfilterelement mit den Merkmalen des Anspruchs 1.

Vorgeschlagen wird, an wenigstens einer Stirnseite des Kompaktfilterelements einen über die Stirnseite überstehenden Schutzkragen anzubringen, insbesondere aus einem elastomeren Werkstoff. Wird ein derartig ausgerüstetes Kompaktfilterelement unsachgemäß mit seinen Kanten auf eine Unterlage aufgeschlagen, so werden die Stöße durch den Schutzkragen abgefedert und einem Anriss im Kantenbereich wird entgegen gewirkt. Daneben ist das Filterelement geschützt, wenn es auf feuchtem und/oder schmutzigem Untergrund abgelegt ist.

Bevorzugt ist zusätzlich wenigstens ein sich entlang des Umfangs des Kompaktfilterelements erstreckender Hauptdichtkragen vorhanden und der Schutzkragen besteht aus demselben elastomeren Werkstoff wie der angeformte Hauptdichtkragen. Insbesondere sind Hauptdicht- und Schutzkragen einteilig ausgebildet.

Erfindungsgemäß ist der Schutzkragen aus einem spröden Material gebildet oder mit einer spröden Beschichtung versehen ist. Da das spröde Material bei einem unsachgemäßen Aufschlagen des Kompaktfilterelements bricht oder sich darin Risse bilden, wird eine Art Siegel geschaffen, der die unsachgemäße Behandlung dauerhaft markiert und damit den Hersteller vor unberechtigten Haftungsansprüchen schützen kann. Zur Erhöhung der Fälschungssicherheit können in die spröde Siegelschicht an sich bekannte Sicherheitsmerkmale wie z.B. Hologramme eingebettet werden.

Alternativ ist der Schutzkragen als Hülse aus einem starren Werkstoff gebildet, die einen radial vom Kompaktfilterelement abstehenden Steg aufweist, auf den der Hauptdichtkragen mit einer Aufnahmenut aufgezogen ist. Eine starre Hülse bietet nicht nur einen Schlagschutz der Kante, sondern auch einen Schutz gegen Knicke oder Dellen an der Filteraußenhaut, sollte das Kompaktfilterelement unter schweren Gegenständen abgelegt werden. Die Kombination mit dem aufgesteckten Hauptdichtring hat den weiteren Vorteil, dass die Form des auf den Schutzkragen aufgezogenen Hauptdichtrings stabil gehalten ist und sich bei evtl. Verformungen der Oberfläche des Filterkörpers nicht ändert.

Der Schutzkragen kann zusätzlich als Griffschutz dienen. Das Element wird beim Handling während der Wartung vor Beschädigungen seiner Außenseite geschützt.

Der Schutzkragen kann auch zusätzlich dazu dienen, das Element im Gehäuse zu verspannen und damit die Haltefunktion von der Dichtfunktion zu entkoppeln.

Der Schutzkragen in Hülsenform ist mit dem Filterkörper vollumfänglich dichtend verbunden, um Leckströmungen unterhalb des Schutzkragens mit dem aufgesteckten Hauptdichtkragen zu unterbinden.

Vorzugsweise erstreckt sich der Schutzkragen zumindest soweit über die Länge des Kompaktfilterelements, von der Stirnseite aus gesehen, dass die im Inneren des Kompaktfilterelements in der Nähe der Stirnseite befindliche Klebstoffraupe überbrückt wird.

Eine weitere Ausführungsform sieht vor, dass der Schutzkragen Griffvorsprünge oder Griffmulden aufweist, die entweder direkt an- bzw. eingeformt sind oder auch nachträglich angesetzt sein können. Dabei erstrecken sich diese Hilfen, die das Greifen des Filterelements und damit den Filterwechsel erleichtern, entweder über den gesamten Umfang oder sind segmentiert.

### Kurze Beschreibung der Zeichnungen

Weitere vorteilhafte Ausgestaltungen sind den weiteren Unteransprüchen zu entnehmen und werden nachfolgend mit Bezug auf die Zeichnung näher erläutert. Die Figuren zeigen:

Fig. 1 ein Kompaktfilterelement mit Schutzkragen in perspektivischer Ansicht;

Fig. 2 eine erste Ausführungsform eines Schutzkragens in Schnittansicht;

Fig. 3 eine zweite Ausführungsform eines Schutzkragens in Schnittansicht

Fig. 4 eine dritte Ausführungsform zusammen mit einem Gehäusetopfelement in Schnittansicht.

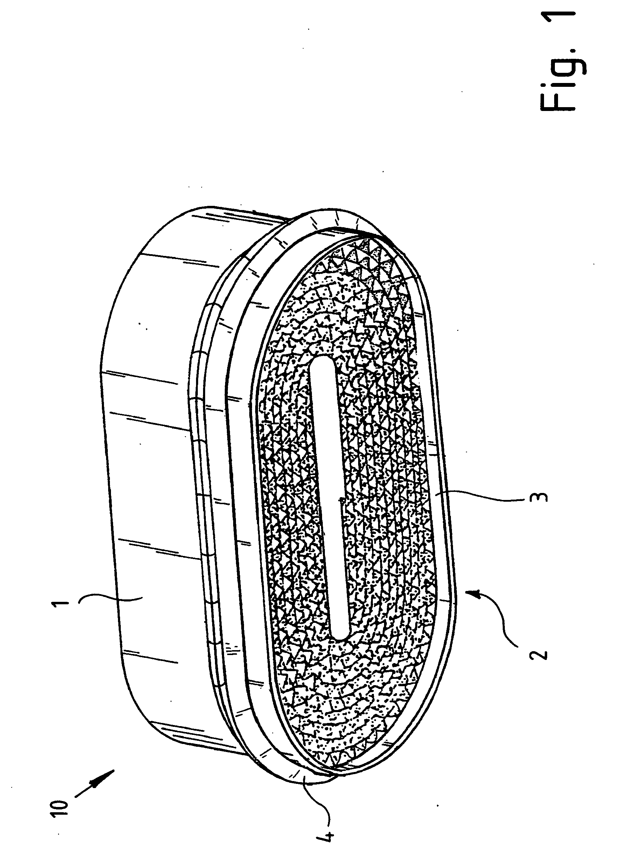

Figur 1 zeigt in einer perspektivischen Darstellung ein Kompaktfilterelement 10, dessen Filterkörper 1 aus einem gewickelten Filtermedium besteht.

Das flächenförmige Filtermedium ist seinerseits aus zwei miteinander über Klebstoffraupen verbundenen Filterpapieren gebildet. Dabei sind ein gewelltes und ein glattes Filterpapier kombiniert, so dass dazwischen eine Vielzahl von axialen Kanälen mit halbrundem oder bzw. dreieckigem Querschnitt ausgebildet ist. Von der Anströmseite her gesehen sind die Kanäle endseitig vollständig abgeschlossen, sodass eine Strömung nur durch die Filterpapiere hindurch in die darüber liegenden Kanäle möglich ist. Diese Kanäle wiederum sind zur Anströmseite hin abgeschlossen und sind nur zur Reinluftseite hin offen.

Um Stöße auf den Kantenbereich des Filterkörpers 1 abzufedem und dadurch Einrisse am Filterpapier selbst oder Ablösungen der Klebstoffe vom Papier zu verhindern, ist erfindungsgemäß auf den Filterkörper 1 ein Schutzkragen 3 aufgezogen, der den Filterkörper 1 an seinem Umfang im Bereich des Übergangs zur Stirnfläche 2 umfasst und noch über die Stirnfläche 2 hinaus steht. Die Stirnseite 2 kennzeichnet in der vorliegenden Darstellung die Rohluftseite, also diejenige Seite, an der Rohluft angesaugt wird. Auch an der gegenüberliegenden Seite, der Reinluftseite, kann ein gleichartiger Schutzkragen vorgesehen sein.

Zur vollständigen Abdichtung eines Ringspalts zwischen dem Kompaktfilterelement 10 und einem Luftfiltergehäuse ist ein Hauptdichtkragen 4 aus einem elastomeren Werkstoff vorgesehen, der den Filterkörper 1 über den gesamten Umfang umgibt und vorzugsweise direkt an den Filterkörper 1 angeformt ist.

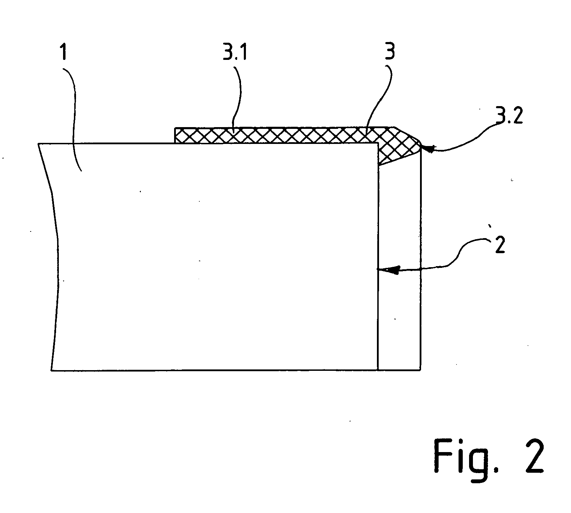

In einer ersten Ausführungsform eines erfindungsgemäßen Schutzkragens 3, der in Fig. 2 im Schnitt dargestellt ist, ist der Schutzkragen 3 mit einem dünnen Umfassungsbereich 3.1, welcher den Filterkörper 1 umgibt, und einem Profilsteg 3.2 ausgebildet. Der Querschnittbereich 3.1 verhindert dabei insbesondere Beschädigungen vom Umfang her, während der Steg 3.2 zur Abfederung von Stößen z. B. bei einem unsachgemäßen Ausklopfen des Filterkörpers 1 dient.

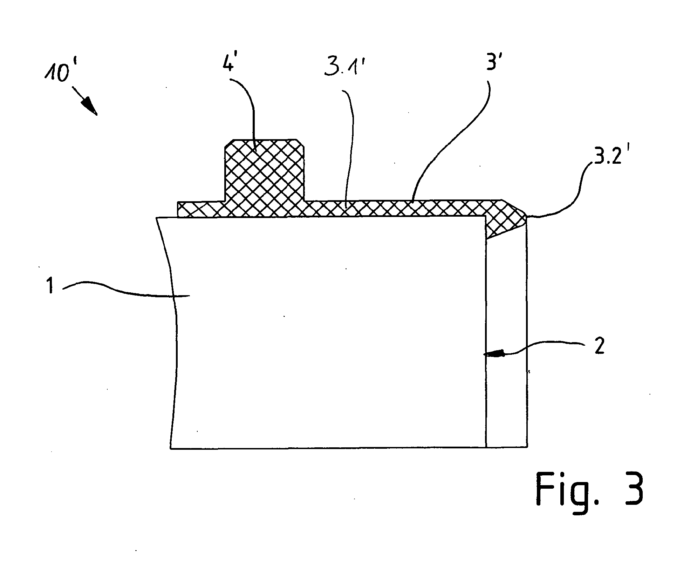

Fig. 3 zeigt eine zweite Ausführungsform eines Schutzkragens 3' , der wiederum einen über die Stirnfläche 2 hinaus stehenden Profilsteg 3.2' aufweist, bei dem aber der Umfassungsbereich 3.1' nahtlos in den Hauptdichtkragen 4' übergeht. Hauptdichtkragen 4' und Schutzkragen 3' bestehen bei dieser Ausführungsform aus demselben Werkstoff und sind einteilig ausgebildet.

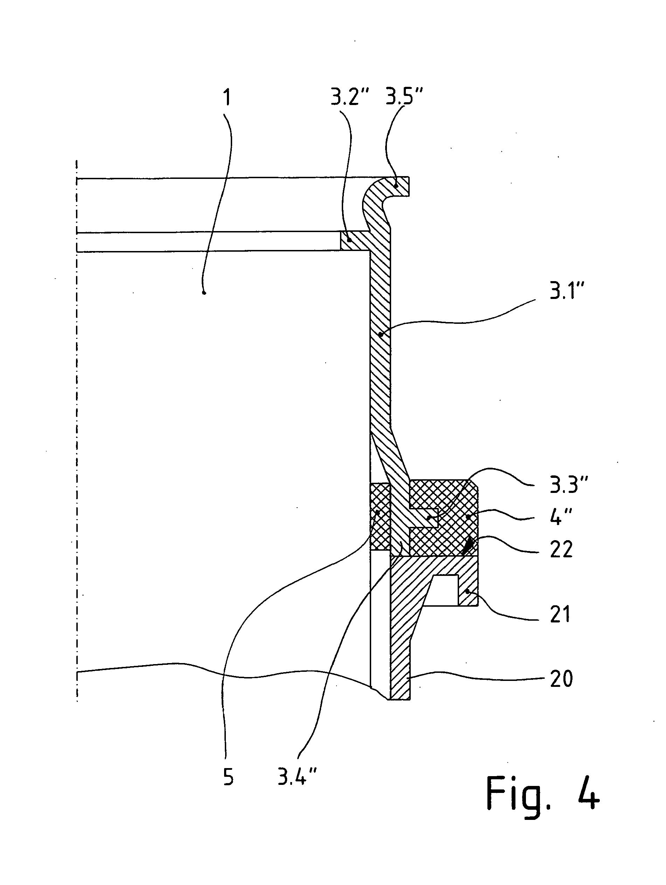

Fig. 4 zeigt eine weitere Ausführungsform eines Schutzkragens 3" , der in diesem Fall nicht aus einem elastomeren, sondern aus einem starren Werkstoff besteht, insbesondere aus einem thermoplastischen Kunststoff. Er umfasst im Querschnitt gesehen einen Doppelwinkel, wobei ein Winkelstück 3.2" die Vorderkante an der Stirnseite des Filterkörpers 1 umgreift und das andere Winkelstück 3.3." als Steg radial am Umfang des Filterkörpers absteht. Ein kompatibel ausgebildeter Hauptdichtkragen 4" weist eine Nut auf, über die der Hauptdichtkragen 4" auf den Winkel 3.3" aufgeschoben werden kann.

Der Filterkörper 1 samt Schutzkragen 3" ist in ein Gehäusetopfelement 20 eingesetzt, so dass ein Gehäuse ausgebildet ist, in das der Filterkörper 1 eingeschlossen ist. Ein zusätzlicher Dichtring 5 oder eine umlaufend eingespritzte Füllmasse dichtet den Filterkörper 1 gegenüber dem Schutzkragen 3" ab.

Eine sich längs des Filterkörpers erstreckende Wandung 3.1" des Schutzkragens 3" geht jenseits des Winkels 3.3" in einen Abschnitt 3.4" über, der sich auf einer Flanschfläche 22 eines Flansches 21 des Gehäusetopfelements 20 abstützt. Anpresskräfte zur Verbindung von Schutzkragen 3" und Gehäusetopfelement 20 werden nur im Bereich der Flanschfläche 22 zwischen den aus harten Werkstoffen gebildeten Gehäuseteilen übertragen. Der auf dem Winkelstück 3.3" festgelegte Hauptdichtkragen 4" hingegen wird von den Vorspannkräften nicht belastet und kann entsprechend weicher ausgebildet sein.

Ein Griffvorsprung 3.5" ist angeformt, um bei einem Filterwechsel das Kompaktfilterelement 10" leicht aus dem Gehäusetopf 20 entnehmen zu können, nachdem die Verbindung zu diesem gelöst worden ist.

## Patentansprüche

1. Kompaktfilterelement (10, 10' , 10") mit Ausklopfschutz, mit einem aus einem gewickeltem Filtermedium bestehenden Filterkörper (1), der über seine Stirnseiten (2) axial durchströmbar ist, **dadurch gekennzeichnet, dass** an wenigstens einer Stirnseite (2) des Filterkörpers (1) ein den Außenumfang umfassender und über die Stirnseite (2) überstehender Schutzkragen (3, 3' , 3") vorgesehen ist, wobei der Schutzkragen aus einem spröden Material gebildet oder mit einer spröden Beschichtung versehen ist.

2. Kompaktfilterelement (10, 10' , 10") nach Anspruch 1 , **gekennzeichnet durch** wenigstens einen sich entlang des Umfangs des Filterkörpers (1) erstreckenden Hauptdichtkragen (4, 4', 4") aufweist.

3. Kompaktfilterelement (10') nach Anspruch 1 oder 2, **dadurch gekennzeichnet, dass** der Schutzkragen (3') an den Hauptdichtkragen (4') angeformt ist.

4. Kompaktfilterelement (10") nach Anspruch 2, **dadurch gekennzeichnet, dass** der Schutzkragen (3") als Hülse aus einem starren Werkstoff gebildet ist, die einen radial vom Kompaktfilterelement abstehenden Steg (3.3") aufweist, auf den der Hauptdichtkragen (4") mit einer Aufnahmenut (4.2") aufgezogen ist.

5. Kompaktfilterelement (10") nach Anspruch 4, **dadurch gekennzeichnet, dass** der Schutzkragen (3") im Querschnitt einen Doppelwinkel umfasst, wobei ein erster Winkel (3.3") den Steg zur Aufnahme des Hauptdichtkragens (4") bildet und der andere Winkel (3.2") vor dem stirnseitigen Kantenbereich (2) des Filterkörpers (1) liegt.

6. Kompaktfilterelement (10, 10' , 10") nach einem der Ansprüche 1 bis 5, **dadurch gekennzeichnet, dass** das Kompaktfilterelement wenigstens eine Lage glatten Filterpapiers und eine Lage gewellten Filterpapiers umfasst, welche über im Kantenbereich der Filterpapiere aufgetragene Klebstoffraupen verbunden sind, welche zugleich die zwischen den Papieren gebildeten Kanäle endseitig verschließen, und dass sich ein Umfassungsbereich (3.1, 3.1 ' , 3.1" des Schutzkragens (3, 3' , 3") über die Länge des Filterkörpers (1), von der Stirnseite (2) aus gesehen, dass die im Inneren des Kompaktfilterelements in der Nähe der Stirnseite befindliche Klebstoff raupe überbrückt wird.

7. Kompaktfilterelement (10, 10' , 10") nach einem der Ansprüche 1 bis 6, **dadurch gekennzeichnet, dass** der Schutzkragen aus einem spröden Material gebildet oder mit einer spröden Beschichtung versehen ist.

8. Kompaktfilterelement (10") nach einem der Ansprüche 1 bis 6, **dadurch gekennzeichnet, dass** der Schutzkragen (3") Griffvorsprünge (3.5") oder Griffmulden aufweist.

## Claims

1. Compact filter element (10, 10', 10") with knock protection, with a filter body (1) which can be flowed through axially via its end faces (2) and which is made of a rolled filter medium, **characterized in that** at at least one end face (2) of the filter body (1) a protective collar (3, 3', 3") surrounding the outer circumference and projecting beyond the end face (2) is provided, the protective collar being formed by brittle material or provided with a brittle coating.

2. Compact filter element (10, 10', 10") according to claim 1, **characterized by** at least one main sealing collar (4, 4', 4") extending along the circumference of the filter body (1).

3. Compact filter element (10') according to claim 1 or 2, **characterized in that** the protective collar (3') is integrally molded to the main sealing collar (4').

4. Compact filter element (10") according to claim 2, **characterized in that** the protective collar (3") is formed as bushing made of a rigid material that features a bar (3.3") to which the main sealing collar (4") is fitted by means of a capture groove (4.2") and which projects radially out from the compact filter element.

5. Compact filter element (10") according to claim 4, **characterized in that** the protective collar (3") comprises a double angle cross-section, the first angle (3.3") forming the bar for receiving the main sealing collar (4") and the other angle (3.2") being placed in front of the frontal edge region (2) of the filter body (1).

6. Compact filter element (10, 10', 10") according to one of the claims 1 to 5, **characterized in that** the compact filter element comprises at least one layer of smooth filter paper and one layer of undulated filter paper which are connected by adhesive sealing beads applied in the edge region of the filter paper, the adhesive sealing beads closing also the channels on either end formed between the paper and that a circumferential area (3.1, 3.1', 3.1 ") of the protective collar (3, 3', 3") is provided along the length of the filter body (1) seen from the end face (2) so that the adhesive sealing bead inside of the compact filter element near the end face is being bridged.

7. Compact filter element (10, 10', 10") according to one of the clams 1 to 6, **characterized in that** the protective collar is formed by brittle material or provided with a brittle coating.

8. Compact filter element (10") according to one of the claims 1 to 6, **characterized in that** the protective collar (3") features projecting handles (3.5") or recessed handles.

## Revendications

1. Elément de filtre compact (10, 10', 10") avec protection de dépoussiérage, avec un corps de filtre (1) constitué d'une matière filtrante enroulée et pouvant être traversé en sens axial par un flux par l'intermédiaire de ses faces frontales (2), **caractérisé en ce qu'**un rebord de protection (3, 3', 3") encerclant le périmètre extérieur et dépassant de la face frontale (2) est prévu au moins sur une face frontale (2) du corps de filtre (1), le rebord de protection étant réalisé dans un matériau poreux ou étant doté d'un revêtement poreux.

2. Elément de filtre compact (10, 10', 10") selon la revendication 1, **caractérisé en ce qu'**au moins un collet d'étanchéité principal (4, 4', 4") s'étend le long du périmètre du corps de filtre (1).

3. Elément de filtre compact (10') selon la revendication 1 ou 2, **caractérisé en ce que** le rebord de protection (3') est moulé sur le collet d'étanchéité principal (4').

4. Elément de filtre compact (10") selon la revendication 2, **caractérisé en ce que** le rebord de protection (3") est réalisé en forme de douille en un matériau rigide et dotée d'une nervure (3.3") en saillie en sens radial de l'élément de filtre compact et **en ce que** le collet d'étanchéité principal (4") est monté avec une rainure de réception (4.2") sur la nervure.

5. Elément de filtre compact (10") selon la revendication 4, **caractérisé en ce que** le rebord de protection (3") comprend dans sa section un angle double, un premier angle (3.3") formant la nervure de réception du collet d'étanchéité principal (4") et l'autre angle (3.2") étant situé devant la bordure frontale (2) du corps de filtre (1).

6. Elément de filtre compact (10, 10', 10") selon l'une des revendications 1 à 5, **caractérisé en ce que** l'élément de filtre compact comprend au moins une couche de papier filtre lisse et une couche de papier filtre ondulé qui sont reliées par des cordons de colle appliqués dans la bordure des papiers filtres et qui obturent simultanément les canaux formés entre les papiers au niveau des extrémités, et **en ce qu'**une zone de pourtour (3.1, 3.1', 3.1") du rebord de protection (3, 3', 3") est prévue sur la longueur du corps de filtre (1), considéré depuis la face frontale (2), de sorte que le cordon de colle se trouvant à l'intérieur de l'élément de filtre compact à proximité de la face frontale soit comblé.

7. Elément de filtre compact (10, 10', 10") selon l'une des revendications 1 à 6, **caractérisé en ce que** le rebord de protection est réalisé dans un matériau poreux ou est doté d'un revêtement poreux.

8. Elément de filtre compact (10") selon l'une des revendications 1 à 6, **caractérisé en ce que** le rebord de protection (3") présente des poignées en saillie (3.5") ou en creux.
